# EUROPÄISCHE PATENTSCHRIFT

(11) **EP 2 055 187 B1**
(45) Veröffentlichungstag und Bekanntmachung des Hinweises auf die Patenterteilung: **21.11.2012**
(21) Anmeldenummer: 08018550.7
(22) Anmeldetag: 23.10.2008
(51) Int. Cl.: A01M 7/00, A01C 23/00

(54) **Landwirtschaftliche Feldspritze**
Agricultural field spraying device
Pulvérisateur agricole

(30) Priorität: 30.10.2007 DE 102007051704
(43) Veröffentlichungstag der Anmeldung: 06.05.2009
(73) Patentinhaber: Amazonen-Werke H. Dreyer GmbH & Co. KG, 49205 Hasbergen (DE)
(72) Erfinder: Ehlen, Volker, 49205 Hasbergen (DE)

(56) Entgegenhaltungen:
- EP-A1- 1 647 756
- DE-A1- 10 041 148
- FR-A1- 2 759 544
- US-A- 6 122 581

## Beschreibung

Eine derartige landwirtschaftliche Feldspritze ist beispielsweise durch den Prospekt Feldspritzen Amazone UX mit Druckvermerk MI 844 / S 239 (D) 10.05 bekannt.

Derartige landwirtschaftliche Feldspritzen weisen einen Zentralrahmen auf, auf dem ein Vorratsbehälter zur Aufnahme der zu verteilenden Flüssigkeit oder Trägerflüssigkeit angeordnet ist. Auf der Rückseite des Rahmens ist mittels einer Höhenverstelleinrichtung ein in verschiedenen Höhenlagen gegenüber dem Zentralrahmen einstellbares Verteilergestänge angeordnet. An dem Verteilergestänge sind Ausbringleitungen mit Ausbringdüsen zur Verteilung von Pflanzenschutzmitteln oder flüssigen Düngemitteln angeordnet. Den an dem Verteilergestänge angeordneten Flüssigkeitsleitungen und Ausbringeinrichtungen, die als Ausbringdüsen ausgebildet sind, wird die auszubringende Flüssigkeit mittels einer von einer Kraftquelle angetriebene Flüssigkeitspumpe und Dosiereinrichtung in einstellbaren Mengen zugeleitet. Die Flüssigkeitspumpe sind bei den bekannten Feldspritzen, wie beispielsweise gemäß dem vorgenannten Prospekt auf dem Zentralrahmen der Feldspritze angeordnet. Zwischen der Flüssigkeitspumpe und der Dosiereinrichtung einerseits und dem an dem Verteilergestänge angeordneten Ausbringleitung mit zugeordneten Ausbringeinrichtungen verlaufen Zugbringleitungen. Die Anordnung dieser Zubringleitungen zur Flüssigkeitszuführung gestaltet sich relativ aufwendig, da eine Vielzahl von Leitungen von der an dem Zentralrahmen angeordneten Flüssigkeitspumpe und Dosiereinrichtung zu dem Verteilergestänge, welches mittels der Höhenverstellungseinrichtung verstellbar ist, geführt werden müssen. Die Flüssigkeitsleitungen müssen so ausgestaltet sein, dass das Verteilergestänge mit der Höhenverstellungseinrichtung in einfacher Weise verstellt werden kann. Die Flüssigkeitsleitungsführung ist dann in diesen Fällen im Bereich der Höhenverstellungseinrichtung teilweise relativ aufwendig. Außerdem müssen relativ lange Flüssigkeitsleitungen, in den das auszubringende Pflanzenschutzmittel oder der flüssige Dünger befindet, vorhanden sein und entsprechend verlegt werden.

Durch die DE 100 41 148 A1 ist eine Gülleausbringeinrichtung mit einem Verteilergestänge bekannt. An dem Verteilergestänge sind Flüssigkeitspumpen angeordnet.

Der Erfindung liegt die Aufgabe zugrunde, in einfacher Weise eine optimierte Flüssigkeitsleitungsführung für die Feldspritze vorzuschlagen.

Diese Aufgabe wird erfindungsgemäß durch die Merkmale des Anspruches 1 gelöst.Infolge dieser Maßnahmen ergeben sich sehr kurze Flüssigkeitsleitungen von der Flüssigkeitspumpe und/oder der Dosiereinrichtung zu den an dem Verteilergestänge angeordneten Ausbringleitungen. Die Flüssigkeitspumpe und die Dosiereinrichtung mit den sie verbindenden Flüssigkeitsleitungen bzw. die hiermit den Ausbringleitungen des Verteilergestänges verbindenden Leitungen sind dann nur noch relativ kurz. Eine optimierte Flüssigkeitsleitungsführung wird so in einfacher Weise erreicht.

Bei einer Feldspritze, bei der das Verteilergestänge mittels einer parallelogrammähnlichen Höhenverstelleinrichtung am Zentralrahmen angeordnet ist, ist vorgesehen, dass die Pumpe an der parallelogrammähnlichen Höhenverstelleinrichtung angeordnet ist.

In optimierter Weise kann die Pumpe an dem höhenverstellbaren Hubrahmen des Verteilergestänges befestigt sein.

Weitere Einzelheiten der Erfindung sind der Erfindung sind der Beispielsbeschreibung und den Zeichnungen zu entnehmen. Hierbei zeigen
- Fig. 1: die prinzipielle Anordnung der Flüssigkeitspumpe an dem Zentralrahmen der Feldspritze gemäß des Standes der Technik und
- Fig. 2: die erfindungsgemäße Anordnung der Flüssigkeitspumpe an der Höhenverstellungseinrichtung bzw. dem Hubrahmen des Verteilergestänges in Seitenansicht und in Prinzipdarstellung.

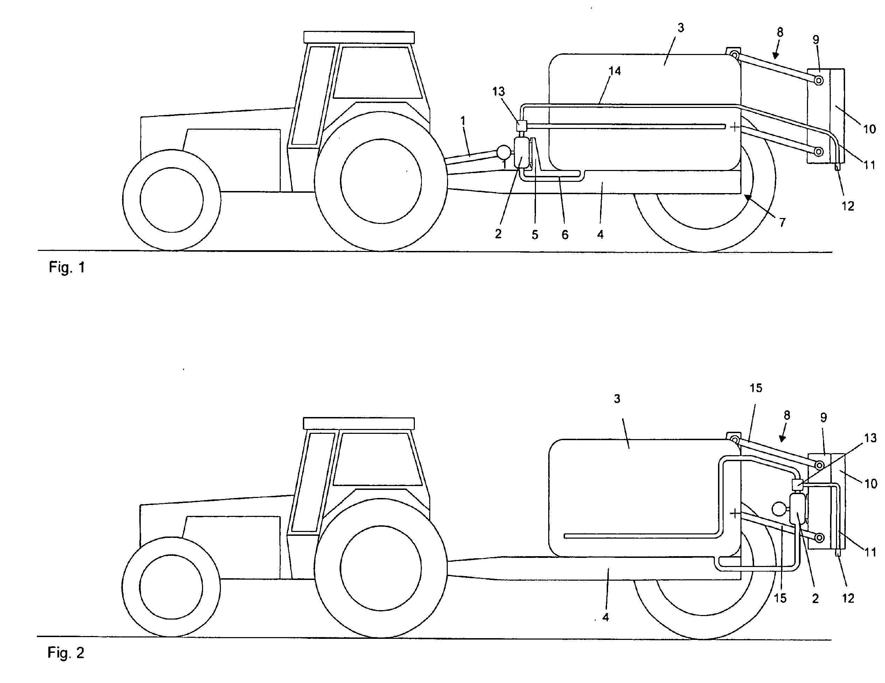

Gemäß Fig. 1, die die prinzipielle Ausgestaltung einer Feldspritze nach dem Stand der Technik zeigt, ist die über die Gelenkwelle 1 angetriebene Flüssigkeitspumpe 2 vor dem Flüssigkeitstank 3 der Feldspritze an einer an dem Zentralrahmen 4 angeordneten Halterung 5 befestigt. Die Flüssigkeitspumpe 2 ist über die Saugleitung 6 mit dem Flüssigkeitstank 3 verbunden. Des Weiteren ist auf der Rückseite 7 des Zentralrahmens 4 der Feldspritze mittels der parallelogrammartigen Höhenverstelleinrichtung 8 der als Hubrahmen 9 ausgebildete Tragrahmen des Verteilergestänges 10 angeordnet. An dem Tragrahmen 9 des Verteilergestänges 10 ist in nicht näher dargestellter Weise das Verteilergestänge 10, an dem die Ausbringleitungen 11 mit den Ausbringdüsen 12 angeordnet sind, befestigt. Von der Flüssigkeitspumpe 2 und der Dosiereinrichtung 13 führt eine Flüssigkeitsleitung 14 zu der Ausbringleitungen 11 des Verteilergestänges 10.

Bei dem Ausführungsbeispiel gemäß Fig. 2, die die Anordnung der Flüssigkeitspumpe 2 in erfindungsgemäßer Weise an der Höhenverstellungseinrichtung 8 bzw. am höhenverstellbaren Verteilergestänge 10 zeigt, ergeben sich sehr kurze Flüssigkeitsleitungen 14 von der Flüssigkeitspumpe 2 bzw. der Dosiereinrichtung 13 zu der an dem Verteilergestänge 10 angeordneten Ausbringleitungen 11 mit den als Ausbringdüsen 12 ausgebildeten Ausbringeinrichtung. Das Verteilergestänge 10 ist ebenfalls mittels einer parallelogrammähnlichen Halterung 8 in Höhenrichtung einstellbar an dem Zentralrahmen 4 angeordnet. Die Flüssigkeitspumpe 2 ist mittels Befestigungsmitteln an dem Hubrahmen 9 des Verteilergestänges 10 befestigt. Von der Flüssigkeitspumpe 2 und der Dosiereinrichtung 13 führen sehr kurze Verbindungsleitungen 14 und zu der Ausbringleitung 11 des Verteilergestänges 10.

In nicht dargestellter Weise kann die Pumpe 2 an der parallelogrammartigen Höhenverstellungseinrichtung 8 bzw. den Gelenkarmen 15 der parallelogrammartigen Verstellungseinrichtung 8 angeordnet sein.

## Patentansprüche

1. Landwirtschaftliche Feldspritze mit einem Zentralrahmen (4), ein an dem Zentralrahmen (4) mittels einer Höhenverstelleinrichtung (8) in verschiedenen Höhenlagen gegenüber dem Zentralrahmen (4) einstellbares Verteilergestänge (10), zumindest einer mittels einer Kraftquelle angetriebenen Flüssigkeitspumpe (2) und Dosiereinrichtungen (13), **dadurch gekennzeichnet, dass** die Flüssigkeitspumpe (2) an der Höhenverstellungseinrichtung oder der höhenverstellbaren Aufhängevorrichtung (8) des Verteilergestänges (10) angeordnet ist.

2. Feldspritze nach Anspruch 1, **dadurch gekennzeichnet, dass** das Verteilergestänge (10) mittels eines parallelogrammähnlichen Höhenverstelleinrichtung (8, 15) am Zentralrahmen (4) angeordnet ist, dass die Flüssigkeitspumpe (2) an der parallelogrammähnlichen Höhenverstelleinrichtung (8) angeordnet ist.

## Claims

1. Agricultural field spraying device with a central frame (4), a distributor linkage (10) which is adjustable on the central frame (4) by means of a height-adjusting device (8) in different height positions in relation to the central frame (4), at least one liquid pump (2) driven by means of a power source, and metering devices (13), **characterized in that** the liquid pump (2) is arranged on the height-adjusting device or the height-adjustable suspension device (8) of the distributor linkage (10).

2. Field spraying device according to Claim 1, **characterized in that** the distributor linkage (10) is arranged on the central frame (4) by means of a parallelogram-like height-adjusting device (8, 15), and **in that** the liquid pump (2) is arranged on the parallelogram-like height-adjusting device (8).

## Revendications

1. Pulvérisateur agricole comprenant un châssis central (4), une barre distributrice (10) sur le châssis central (4), pouvant être ajustée à différentes positions en hauteur par rapport au châssis central (4) au moyen d'un dispositif de réglage en hauteur (8), au moins une pompe à liquide (2) entraînée au moyen d'une source de puissance et des dispositifs de dosage (13), **caractérisé en ce que** la pompe à liquide (2) est disposée sur le dispositif de réglage en hauteur ou le dispositif d'attelage réglable en hauteur (8) de la barre distributrice (10).

2. Pulvérisateur agricole selon la revendication 1, **caractérisé en ce que** la barre distributrice (10) est disposée au moyen d'un dispositif de réglage en hauteur en forme de parallélogramme (8, 15) sur le châssis central (4), et **en ce que** la pompe à liquide (2) est disposée sur le dispositif de réglage en hauteur en forme de parallélogramme (8).
